(19) Europäisches Patentamt / European Patent Office / Office européen des brevets

(11) **EP 2 465 771 B1**

(12) **FASCICULE DE BREVET EUROPEEN**

(45) Date de publication et mention
de la délivrance du brevet:
**05.08.2015 Bulletin 2015/32**

(21) Numéro de dépôt: **11009338.2**

(22) Date de dépôt: **24.11.2011**

(51) Int Cl.:
**B64C 11/18** *(2006.01)*      **B64C 27/467** *(2006.01)*

(54) **Pale pour dispositif anti-couple d'hélicoptère**

Schaufelblatt für Gegendrehmomentvorrichtung eines Hubschraubers

Blade for an anti-torque device of a helicopter

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2010 FR 1004891**

(43) Date de publication de la demande:
**20.06.2012 Bulletin 2012/25**

(60) Demande divisionnaire:
**15172737.7**

(73) Titulaire: **Airbus Helicopters**
**13725 Marignane Cedex (FR)**

(72) Inventeurs:
• **Gervais, Marc**
**13007 Marseille (FR)**
• **Gresle, Benoit**
**13330 Pelissanne (FR)**
• **Finck, Sébastien**
**13002 Marseille (FR)**
• **Sudre, Laurent**
**13330 Pelissanne (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 332 492        EP-A1- 0 592 764
EP-A1- 2 085 310        WO-A1-2004/011330
WO-A1-2009/054815        GB-A- 212 018**

**Description**

La présente demande est issue de la demande de brevet française FR1004891 déposée le 15 décembre 2010, dont la teneur est incorporée ici.

L'invention se rapporte au domaine technique général des rotors anti-couple de giravions, notamment d'hélicoptères. Plus précisément, l'invention se rapporte au domaine technique des dispositifs anti-couple à rotor arrière caréné et à répartition angulaire des pales selon une modulation de phase, destinés à des hélicoptères, en particulier. Ces dispositifs anti-couple se distinguent des rotors anti-couple conventionnels, non carénés, qui ne font pas l'objet de la présente invention.

L'invention concerne notamment des dispositifs anti-couple précités, appelés également « fenestron® », dans lesquels un stator redresseur comportant des aubes fixes à profils aérodynamiques, est fixé en aval d'un rotor anti-couple dans la veine ce circulation d'air ou « carène ».

De tels dispositifs anti-couple sont connus notamment dans le document FR 2 719 549, lequel décrit une loi de répartition angulaire des pales du rotor, de manière à répartir le plus efficacement possible l'énergie acoustique dans tout le spectre de fréquences, en tenant compte des limitations mécaniques de liaison des pales. Les figures relatives à ce document montrent des pales à formes en plan sensiblement rectangulaires. En outre, pour éviter que l'interaction du sillage d'une pale quelconque du rotor sur une aube quelconque du redresseur ne se produise simultanément sur l'ensemble de l'envergure de l'aube, les aubes du redresseur sont disposées de façon non radiale. Chacune des aubes est par exemple inclinée sur la direction radiale, de préférence d'un angle compris entre 1° et 25°, de l'axe de la veine vers sa périphérie et dans le sens opposé au sens de rotation du rotor. Une telle orientation est favorable à la reprise du couple s'exerçant, en réaction à la rotation du rotor, sur un corps central sensiblement coaxial à la veine et renfermant les organes d'entraînement du rotor et les organes de commande du pas collectif des pales. Cette reprise de couple peut alors être supportée par les aubes situées dans la veine.

On connaît également par l'intermédiaire du document WO 2006/110156 un dispositif anti-couple caréné pourvu de pales courbes. Ce document divulgue des pales courbes combinées à des aubes de redresseur décalées radialement et transversalement afin de diminuer le bruit d'interaction entre lesdites pales et lesdites aubes. Les pales décrites présentent chacune une forme géométrique avec une courbure simple et unique. Un dispositif anti-couple comportant de telles pales et un tel agencement d'aubes n'est pas en mesure d'améliorer significativement ses performances pour s'approcher des performances d'un rotor anti-couple conventionnel.

Le document US 2004/0022635 ou WO2004011330 décrit une configuration d'une pale d'hélice concave/convexe suivant le modèle d'une onde naturelle. Le bord d'attaque d'une telle pale présente un segment concave suivi d'un segment convexe. Le bord d'attaque et le bord de fuite sont arrondis de manière à favoriser la formation d'un écoulement de fluide approprié le long des surfaces concernées et à limiter la formation de vortex pour limiter la trainée aérodynamique. Les meilleurs résultats tels que décrits sont obtenus par une modélisation des surfaces aérodynamiques à partir d'une fonction sinusoïdale ou tangente de la courbe représentative du bord d'attaque de chaque pale et ceci de façon approximative, l'amplitude n'étant pas définie. Une pale présentant une telle forme géométrique ne parait cependant pas adaptée pour améliorer les performances d'un dispositif anti-couple caréné. Autrement dit, la définition de chaque pale ne présente pas les caractéristiques requises pour satisfaire aux strictes exigences industrielles nécessitées par la réalisation d'un dispositif anti-couple à rotor arrière caréné pour giravion.

Les figures dudit document US 2004/0022635 montrent de plus des pales ayant une corde d'extrémité inférieure à la corde maximale desdites pales.

Le document EP0332492 décrit une pale pour hélice carénée à haute performance, dont la partie active aérodynamiquement est de forme rectangulaire. La cambrure maximale croît de sensiblement 0 à sensiblement 0,04. L'épaisseur maximale relative décroît de sensiblement 13,5% à sensiblement 9,5%.

Le document EP2085310 décrit un rotor anti-couple caréné dont le bruit émis à une fréquence FE et perçu à une fréquence FP est minimisé. Dans ce rotor, un stator redresseur du flux d'air est en arrière du chemin des pales dudit rotor (13).

Le document WO200954815 décrit des pales de ventilateur axial avec des surfaces aérodynamiques à corrugations qui provoquent des succions et pressions. Ces corrugations augmentent aussi la rigidité de la pale. Sur les figures, les pales sont évasées depuis l'emplanture jusqu'à l'extrémité libre.

Le document GB212018 décrit des hélices faites d'une seule pièce de métal.

La présente invention a alors pour objet de proposer une pale ayant une nouvelle forme géométrique tridimensionnelle profilée et vrillée par rapport à une ligne de vrillage selon une loi de vrillage prédéterminée qui permet de réaliser un dispositif anti-couple caréné pour hélicoptères notamment, ne présentant pas les limitations mentionnées ci-dessus.

Un objet de la présente invention permet également de proposer une forme géométrique tridimensionnelle de pale pour réaliser un dispositif anti-couple caréné pour hélicoptères dont le rendement en effort anti-couple est amélioré par rapport aux dispositifs anti-couple carénés connus.

Un autre objet de la présente invention vise à proposer un dispositif anti-couple caréné améliorant les performances en effort anti-couple tout en n'altérant pas les gains en termes d'émission acoustique et de sécurité que présentent les dispositifs anti-couple carénés.

Les objets assignés à l'invention sont atteints à l'aide d'une pale telle que revendiquée pour dispositif anticouple arrière d'un giravion, ledit dispositif comportant un rotor caréné, ladite pale ayant une forme géométrique tridimensionnelle définie par différentes sections à profils aérodynamiques comprises entre un bord d'attaque et un bord de fuite de la pale et délimitées radialement par une section d'emplanture et une section d'extrémité de cette pale; au moins deux sections à profils aérodynamiques ayant des valeurs de cordes différentes le long d'une ligne d'empilement étendue depuis la section d'emplanture jusqu'à la section d'extrémité, cette pale étant vrillée, cette pale comportant une ligne d'empilement des sections à profils aérodynamiques déterminant avant vrillage une surface plane d'extension délimitée radialement de la section d'emplanture à la section d'extrémité. La pale comporte aussi une ligne de vrillage de la surface plane d'extension qui est définie selon une loi de vrillage prédéterminée, ladite ligne d'empilement s'étendant à une distance comprise entre 25% et 50% de la corde en partant du bord d'attaque et présentant sur la surface plane d'extension une courbe avec successivement à partir de la section d'emplanture une première flèche arrière, une flèche avant et enfin une dernière flèche arrière jusqu'à la section d'extrémité, caractérisé en ce que ladite section d'emplanture à profil aérodynamique ayant une corde inférieure à la corde de la section d'extrémité à profil aérodynamique et ladite corde des sections à profils aérodynamiques s'élargissant depuis la section d'emplanture en direction de la section d'extrémité dont la corde est égale ou inférieure à 1,6 fois la corde de référence $C_{ref}$ de la section d'emplanture.

Il convient de noter que l'on entend par l'expression « section à profil aérodynamique » toute surface correspondant à une coupe plane d'une pale, cette coupe étant orthogonale à l'axe de pas (suivant la définition ultérieure) et le contour de ladite section ayant la forme d'un profil aérodynamique.

Selon un exemple de réalisation de la pale conforme à l'invention, l'épaisseur relative des sections est diminuée progressivement en direction radial depuis la section d'emplanture vers la section d'extrémité de la pale, de manière à ce que la section d'extrémité présente une épaisseur relative de l'ordre de 9% à 6%, favorablement 6,9%.

Selon un autre aspect, l'épaisseur relative de la section d'emplanture est comprise entre 9% et 14%, et favorablement égale à 12%.

Selon un exemple de réalisation de la pale conforme à l'invention, la corde $C$ maximale atteint en extrémité de pale la valeur de la corde de référence $C_{ref}$ multipliée par un facteur $a_c$ supérieur à l'unité, notamment supérieur ou égal à 1,1 et inférieur ou égal à 1,6.

Selon un exemple de réalisation de la pale conforme à l'invention, le facteur $a_c$ est égal à 1,38.

Selon un exemple de réalisation de la pale conforme à l'invention, la ligne d'empilement s'étend à une distance de 30% de la corde en partant du bord d'attaque des profils aérodynamiques.

Selon un exemple de réalisation conforme à l'invention, la pale comporte un assemblage de six sections distinctes à profils aérodynamiques le long de la ligne d'empilement.

Selon un exemple de réalisation de la pale conforme à l'invention, le bord d'attaque présente en continuité de la section d'emplanture à profil aérodynamique à la section d'extrémité à profil aérodynamique, une forme concave puis convexe.

Selon un exemple de réalisation de la pale conforme à l'invention, la corde présente une loi d'évolution du genre :

$$C(r) = C_{ref} \, , \quad \text{si} \quad k \leq r \leq b_c \times R_{max}$$

et

$$C(r) = C_{ref} + \left[ C_{max} - C_{ref} \right] \times \frac{\left[ r - (b_c \times R_{max}) \right]^n}{\left[ R_{max} - (b_c \times R_{max}) \right]^n} \, , \quad \text{si} \quad r \geq b_c \times R_{max}$$

avec:

$r$      : rayon d'une section courante à profil aérodynamique,
$k$      : rayon de la section d'emplanture à profil aérodynamique,
$C(r)$      : valeur de la corde pour un rayon $r$,
$R_{max}$      : rayon maximal de la section d'extrémité à profil aérodynamique,
$C_{ref}$      : corde de référence de la section d'emplanture à profil aérodynamique,
$C_{max}$      : corde de la section d'extrémité à profil aérodynamique égale à ($a_c \times C_{ref}$).

*x*        : signe de la multiplication, et

$b_c$ et *n*    : des première et deuxième constantes prédéterminées.

On note, que l'on entend dans le texte par rayon d'une section, la distance séparant ladite section du centre de rotation du rotor muni de la pale concernée.

Selon un exemple de réalisation de la pale conforme à l'invention, la première constante $b_c$ est comprise entre 0 et l'unité. La valeur nulle de la première constante $b_c$ correspond à la valeur nulle du rayon k de la section d'emplanture à profil aérodynamique.

Selon un exemple de réalisation de la pale conforme à l'invention, la première constante $b_c$ vaut 0,68 de sorte que le début de l'élargissement de la corde se situe sensiblement à 0,68 fois le rayon maximal de ladite pale.

Selon un exemple de réalisation de la pale conforme à l'invention, la deuxième constante *n* est comprise entre 1 et 5.

Selon un exemple de réalisation de la pale conforme à l'invention, la deuxième constante n vaut 1,7.

Selon un exemple de réalisation de la pale conforme à l'invention, la ligne d'empilement est une courbe, tracée par rapport à une direction généralement radiale du rotor, relative à l'axe de pas moyen de chaque pale et donnée par un polynôme du genre :

$$Y_{AC}/C_{ref} = a_e \times Q^3 + b_e \times Q^2 + c_e \times Q \quad \text{avec} \quad 0 \leq Q \leq 1$$

et : $Q = \dfrac{r - k}{R_{max} - k}$   est un nombre adimensionnel.

$Y_{ac}$ est la position de la ligne d'empilement des sections à profils aérodynamiques pour un rayon *r*,

et $a_e$, $b_e$, $c_e$ sont des première, deuxième et troisième valeurs prédéterminées.

Selon un exemple de réalisation de la pale conforme à l'invention, les première, deuxième et troisième valeurs $a_e$, $b_e$ et $c_e$ sont choisies pour obtenir une ligne d'empilement qui s'étend selon une répartition sensiblement identique de part et d'autre d'un axe de pas moyen fictif de la pale pour équilibrer les moments de commande en pas s'exerçant sur la pale.

Selon un exemple de réalisation de la pale conforme à l'invention, les première, deuxième et troisième valeurs $a_e$, $b_e$ et $c_e$ valent respectivement (- 2,5681), (+ 3,9238) et (+ 1,3558).

Dans ces conditions, l'ensemble des données précédentes permet de définir la surface plane d'extension. La forme géométrique de la pale recherchée est alors obtenue par vrillage, selon la loi de vrillage prédéterminée, des sections à profils aérodynamiques autour de la ligne de vrillage correspondant à l'axe d'empilement, c'est-à-dire par vrillage de ladite surface plane d'extension.

Les objets assignés à l'invention sont également atteints à l'aide d'un dispositif anti-couple comportant un carénage délimitant une veine de circulation d'air dans laquelle est disposé un rotor pourvu de pales telles que précitées, des organes d'entraînement du rotor et des organes de réglage du pas desdites pales. Bien évidemment, le dispositif peut comporter le cas échéant dans la veine de circulation d'air un stator redresseur du flux d'air muni d'aubes à profils aérodynamiques.

Dans la présente, le terme « flèche » désigne une forme courbe dans le plan local de la pale, sensiblement orientée soit vers l'avant, soit vers l'arrière, correspondant respectivement au bord d'attaque et au bord de fuite de la pale.

En outre, on définit la ligne d'empilement par une ligne fictive de construction suivant laquelle on empile et on assemble les différents profils aérodynamiques constitutifs de la pale, définissant les différentes sections comprises entre la section d'emplanture dirigée vers l'axe du rotor et la section d'extrémité de rayon maximal. Dans le prolongement de cette zone profilée se trouve le bras éventuel d'entraînement de ladite pale.

L'axe de pas est déterminé de sorte que les moments statiques par rapport à cet axe sur la pale soient les plus faibles. Il est donc avantageux de faire correspondre la ligne d'empilement avec l'axe de pas quand la ligne d'empilement est d'une part une droite et d'autre part le lieu des foyers aérodynamiques des profils aérodynamiques. Pour une ligne d'empilement courbe, on définit cette ligne d'empilement de façon que ses deux extrémités passent par l'axe de pas moyen.

Par ailleurs, on définit par les termes « chemin de pale » l'espace dans lequel la pale peut s'étendre avec ses différents réglages de l'angle de pas.

Dans ces conditions, une pale conforme à l'invention permet avantageusement de réaliser un dispositif anti-couple caréné présentant un gain de poussée maximale de l'ordre de 4%.

Un autre avantage d'un dispositif anti-couple caréné conforme à l'invention, réside dans une diminution de la puissance consommée de l'ordre de 10%.

Un autre avantage d'un dispositif anti-couple caréné conforme à l'invention, réside dans une diminution significative de l'effort de commande statique pour la mise en pas des pales du rotor.

Une pale conforme à l'invention permet également de réduire le bruit mono-polaire (bruit dit d'épaisseur) dû à la forte variation de corde en extrémité. Cette variation de corde génère une modification des signaux acoustiques émis par chaque section de pale. Les signaux acoustiques sont par conséquent différents pour chaque section de pale. Ceci empêche une addition efficace des ondes acoustiques reçues par un observateur lointain. En outre, cette variation de corde en extrémité de la pale n'augmente pas le bruit d'épaisseur dans la mesure où cette corde importante est compensée en extrémité par une épaisseur relative plus faible. On conserve à ce titre une épaisseur réelle équivalente à l'épaisseur d'une pale à forme en plan rectangulaire, malgré l'augmentation de la corde vers l'extrémité.

Un autre avantage de la pale conforme à l'invention réside dans une réduction du bruit d'interaction entre les pales du rotor et les aubes du stator redresseur (bruit dit dipolaire ou bruit dit de charge). En effet, le bord de fuite courbe dans le sens indiqué précédemment des pales empêche que la nappe tourbillonnaire d'une pale ne vienne heurter une aube fixe de façon parallèle. Le bord de fuite incurvé génère un déphasage des ondes acoustiques reçues par un observateur lointain et contribue ainsi à la réduction du bruit perçu par ledit observateur.

Un autre avantage de la pale conforme à l'invention réside dans une réduction du bruit de bord de fuite (interaction des fluctuations de pression pariétales avec le bord de fuite) grâce à la forme courbe dudit bord de fuite. Les effets tridimensionnels engendrés par le bord de fuite courbe dans le sens indiqué précédemment compensent en effet le déficit de sillage observé en bord de fuite (ledit déficit correspondant à une réduction de la vitesse d'écoulement de l'air en aval du bord de fuite due à la présence de la pale dans l'écoulement), ce qui réduit le bruit de bord de fuite à caractère fréquentiel large bande. La compensation du déficit de sillage empêche également la corrélation des éléments tourbillonnaires, réduisant ainsi l'impact du sillage du rotor sur les aubes du stator et permettant par suite de réduire le bruit tonal (bruit produisant des harmoniques fréquentielles corrélées à la vitesse de rotation et le nombre de pales du rotor).

Autrement dit, comme la pale a une forme géométrique globale courbe, le sillage tourbillonnaire de ladite pale sera également courbe. Ainsi, lorsque le sillage de la pale rencontre une aube du redresseur, le sillage ne frappe pas parallèlement ladite aube. Ceci permet également de réduire le bruit perçu.

Un autre avantage de la pale conforme à l'invention réside dans l'amélioration des performances générales de ladite pale. Une telle pale permet, à portance égale, de diminuer la vitesse périphérique du rotor. Une telle diminution de vitesse périphérique génère une réduction systématique du bruit généré par toutes les sources de bruit du rotor.

Un autre avantage de la pale conforme à l'invention réside dans un déphasage angulaire entre le bord d'attaque et le bord de fuite en bout de pale. En effet, l'augmentation de la corde en bout de pale combinée à la forme courbe de la ligne d'empilement, permet d'obtenir des flèches différentes entre le bord d'attaque et le bord de fuite. On obtient alors un déphasage des ondes acoustiques lors d'une éventuelle interaction entre une pale et les tourbillons générés par les pales précédentes. Le bruit perçu s'en trouve donc diminué.

L'invention et ses avantages apparaîtront avec plus de détails dans le cadre de la description qui suit avec un exemple de réalisation, donné à titre illustratif et non limitatif, en référence aux figures annexées qui représentent :

- la figure 1, une vue en plan d'un exemple de réalisation d'une pale conforme à l'invention,

- la figure 2, une en perspective d'un exemple de réalisation d'une pale conforme à l'invention,

- la figure 3, une illustration schématique d'un exemple de montage d'une pale conforme à l'invention dans un carénage de rotor anti-couple, et

- la figure 4, une vue latérale d'un exemple de réalisation de rotor anti-couple comportant des pales conformes à l'invention.

Les éléments structurellement et fonctionnellement identiques et présents sur plusieurs figures distinctes sont affectés d'une seule et même référence numérique ou alphanumérique.

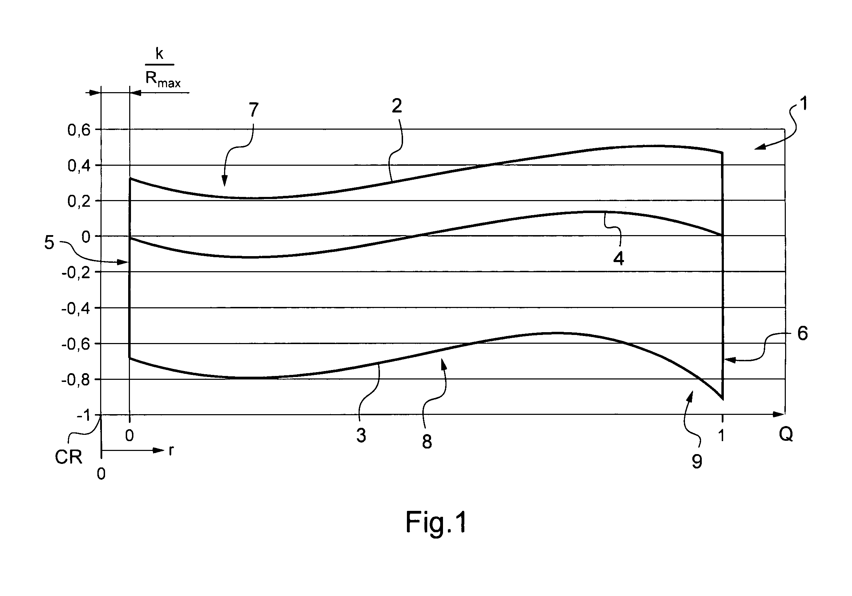

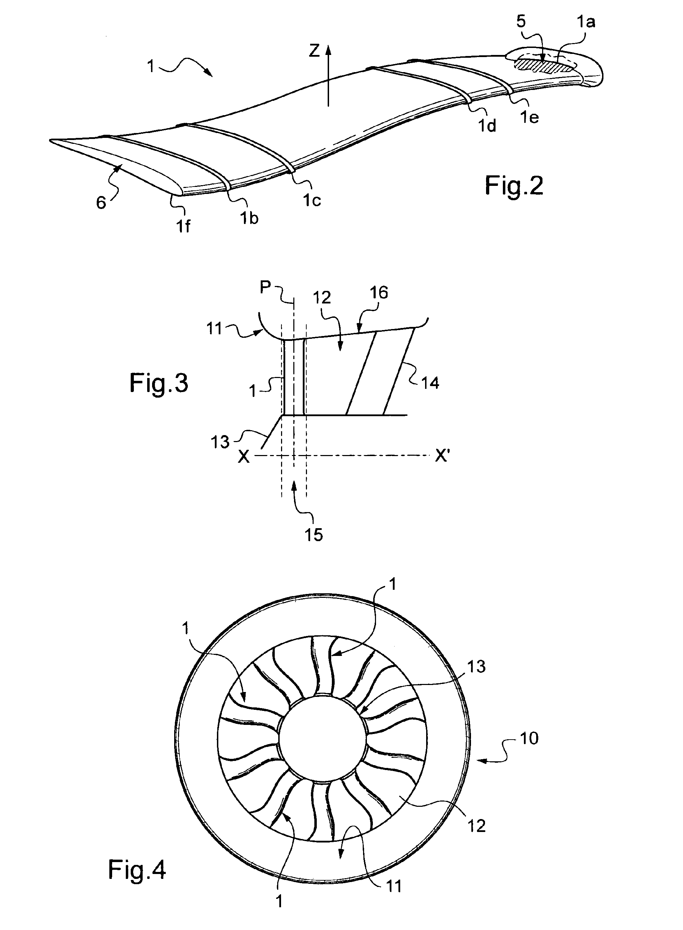

Les objets assignés à l'invention sont atteints à l'aide d'une pale 1 pour dispositif anti-couple arrière d'un hélicoptère. La pale 1, illustrée schématiquement par exemple à la figure 1, comporte un assemblage de sections à profils aérodynamiques et présente un bord d'attaque 2 et un bord de fuite 3. Plus précisément, la figure 1 montre une pale 1 avant vrillage par rapport à une ligne de vrillage 4 selon une loi de vrillage prédéterminée, et présente en fait une surface plane d'extension délimitée d'une part entre le bord d'attaque 2 et le bord de fuite 3 des sections à profils aérodynamiques et d'autre part entre les sections d'emplanture 5 et d'extrémité 6 à profils aérodynamiques respectifs 1a et 1f (figure 2) . Autrement dit, cette surface plane d'extension correspond sensiblement au plan défini par les cordes des profils aérodynamiques, ceci avant vrillage.

L'assemblage comprend au moins deux sections de cordes différentes et de préférence six sections de cordes différentes à profils aérodynamiques 1 a, 1b, 1 c, 1 d, 1 e, 1f, le long d'une ligne d'empilement 4. On pourra se reporter également à la figure 2.

La ligne d'empilement 4 des sections à profils aérodynamiques s'étend à une distance d'une valeur comprise entre 25% et 50% de la corde desdits profils aérodynamiques, en partant du bord d'attaque 2 desdits profils, par conséquent le bord d'attaque également de la pale 1 avant vrillage. Cette ligne d'empilement 4 présente dans le plan de la surface plane d'extension (plan de la figure 1), une forme courbe avec successivement de la section d'emplanture 5 à la section d'extrémité 6 de la zone profilée de la pale 1, une flèche arrière 7, une flèche avant 8 et une dernière flèche arrière 9.

La figure 1 précise par ailleurs les points suivants :

- le centre du rotor CR,

- le rayon r de chaque section.

De plus, la zone profilée s'étend radialement depuis un nombre adimensionnel Q égal à 0 à une valeur égale à l'unité de ce nombre adimensionnel Q. Ainsi, la section d'emplanture 5 est située à un emplacement relatif au nombre adimensionnel Q égal à 0, alors que la section d'extrémité 6 est située à un emplacement relatif au nombre adimensionnel Q égal à l'unité.

La valeur du nombre adimensionnel Q égale à 0 correspond par définition au rayon k correspondant à la section d'emplanture divisé par $R_{max}$, k étant une constante prédéterminée et $R_{max}$ désignant le rayon maximal du rotor.

De cette façon, si la pale nécessite un bras d'entraînement, ce bras d'entraînement est compris entre un nombre adimensionnel Q égal à 0 soit à un rayon r égal à k divisé par $R_{max}$ et la valeur nulle de r.

Selon un exemple de réalisation préférentiel de la pale 1, la ligne d'empilement 4 s'étend à une distance de 30% de la corde en partant du bord d'attaque 2 des profils aérodynamiques. La configuration en flèches de la pale 1, lui permet toutefois de ne pas s'approcher de trop près du redresseur à aubes 14 et par conséquent de ne pas générer une source de bruit supplémentaire. En outre, la pale 1 reste ainsi dans le chemin de pale 15 d'un fenestron standard, quel que soit le pas (angle représentatif de l'incidence aérodynamique à un décalage près) des pales. On évite ainsi de définir un nouveau chemin de pale et une nouvelle veine 12. Il faut donc limiter l'augmentation de corde. Une telle limitation est spécifiquement assurée avec une pale 1 même après vrillage de ladite pale conforme à l'invention.

Il est à noter que l'on entend par le terme « veine » le volume d'air borné par le collecteur 11, le chemin de pale 15, le diffuseur 16 d'une part et le moyeu 13 d'autre part.

Le bord d'attaque 2 présente ainsi en continuité de la section d'emplanture 5 à la section d'extrémité 6 de la pale 1, une forme concave puis convexe.

La pale 1 présente aussi une corde qui s'élargit en direction de la section d'extrémité 6 et ce sur au moins la section d'extrémité 6 à profil aérodynamique 1f, de manière à atteindre une valeur de corde d'extrémité, inférieure ou égale à 1,6 fois la valeur de la corde de référence de la section d'emplanture 5 de la pale 1. Cette valeur de corde maximale est toutefois de préférence supérieure à une fois la valeur de la corde de référence, préférentiellement supérieure ou égale à 1,1 fois cette valeur de corde de référence et notamment égale à 1,38 fois cette valeur.

Avantageusement, l'épaisseur relative des sections est diminuée progressivement en direction de la section d'extrémité 6 de la pale 1, de manière à présenter une épaisseur relative comprise entre 9% et 6% et préférentiellement égale à 6.9% en extrémité de la pale 1.

Par ailleurs, l'épaisseur relative de la section d'emplanture peut être comprise entre 9% et 14%, et favorablement égale à 12%.

Selon un exemple de réalisation de la pale 1 conforme à l'invention, la corde présente une loi d'évolution du genre :

$$C(r) = C_{ref}, \quad \textbf{si} \quad k \le r \le b_c \times R_{max}$$

et

$$C(r) = C_{ref} + \left[ C_{\max} - C_{ref} \right] \times \frac{\left[ r - (b_c \times R_{\max}) \right]^n}{\left[ R_{\max} - (b_c \times R_{\max}) \right]^n} \,, \; \text{si} \; r \geq b_c \times R_{\max}$$

avec :

$r$         : rayon d'une section courante à profil aérodynamique,

$k$         : rayon de la section d'emplanture à profil aérodynamique,

$C(r)$     : valeur de la corde pour un rayon r,

$R_{max}$    : rayon maximal de la section d'extrémité à profil aérodynamique,

$C_{ref}$     : corde de référence de la section d'emplanture à profil aérodynamique,

$C_{max}$    : corde de la section d'extrémité à profil aérodynamique égale à ($a_c$ x $C_{ref}$).

$b_c$ et $n$   : première et deuxième constantes prédéterminées.

La deuxième constante $n$ est une valeur avantageusement comprise entre 1 et 5.

Selon un exemple de réalisation préférentiel, $a_c$ =1,38, $b_c$=0,68 et $n$=1, 7.

Selon un exemple de réalisation de la pale 1 conforme à l'invention, la forme de la courbe constitutive de la ligne d'empilement 4 est donnée par un polynôme du genre :

$$Y_{AC} / C_{ref} = a_e \times Q^3 + b_e \times Q^2 + c_e \times Q \quad \text{avec} \quad 0 \leq Q \leq 1$$

et :   $Q = \dfrac{r - k}{R_{\max} - k}$     est un nombre adimensionnel.

$Y_{ac}$ est la position de la ligne d'empilement des sections à profils aérodynamiques pour un rayon $r$,

et $a_e$, $b_e$, $c_e$ sont des première, deuxième et troisième valeurs prédéterminées.

Les première, deuxième et troisième valeurs $a_e$, $b_e$, $c_e$ sont définies avantageusement pour obtenir une forme de la ligne d'empilement 4 qui s'étend selon une répartition sensiblement identique de part et d'autre d'un axe de pas moyen fictif de la pale 1. Une telle répartition permet d'équilibrer les moments statiques de commande en pas s'exerçant sur la pale 1 autour de l'axe de pas moyen.

Pour déterminer les première, deuxième et troisième valeurs $a_e$, $b_e$, $c_e$, on définit quatre points sur la pale 1, par lesquels doit passer la courbe de la ligne d'empilement 4. Les deux points extrêmes sont positionnés sur l'axe de pas moyen et présentent une amplitude nulle par rapport au dit axe de pas moyen. Deux points sensiblement centraux sont positionnés respectivement avec une première et deuxième amplitudes +A et -A par rapport à l'axe de pas moyen. A l'aide d'une loi d'interpolation, on détermine ensuite la courbe passant par les quatre points et on obtient les coefficients recherchés.

Les première et deuxième amplitudes +A et -A de la ligne d'empilement 4 sont définies par exemple avec A égal à 0,018 fois le rayon maximal du rotor.

Selon un exemple de réalisation préférentiel, les première, deuxième et troisième valeurs sont égales à : $a_e$=-2,5681, $b_e$=+3,9238 et $c_e$=+1,3558.

Dans ces conditions, l'ensemble des données précédentes permet de définir la surface plane d'extension. La forme géométrique de la pale recherchée est alors obtenue par vrillage, selon la loi de vrillage prédéterminée, des sections à profils aérodynamiques autour de l'axe d'empilement, c'est-à-dire par vrillage de ladite surface plane d'extension.

Les objets assignés à l'invention sont également atteints à l'aide d'un dispositif anti-couple 10, illustré par exemple aux figures 3 et 4, comportant un carénage 11 délimitant une veine 12 de circulation d'air dans laquelle est disposé un rotor 13 pourvu de pales 1 telles que précitées. Des organes d'entraînement du rotor 13 et des organes de réglage de pas desdites pales 1 font partie d'un tel dispositif anti-couple, mais ne sont pas représentés sur les figures.

Le dispositif anti-couple comprend également des aubes 14 d'un stator redresseur du flux d'air, en aval du rotor, disposées dans la veine 12. Ces aubes 14 permettent de délimiter la veine 12 et de rigidifier l'assemblage constitutif du dispositif anti-couple.

La pale 1, illustrée très schématiquement à la figure 3, s'étend dans un chemin de pale 15, et présente un axe de pas moyen P confondu avec la ligne d'empilement 4 lorsque cette dernière est droite ou passant par les deux extrémités de ladite ligne d'empilement 4 lorsque cette dernière est courbe conformément à l'invention. L'axe de pas moyen P s'étend donc dans le prolongement du bras d'actionnement et d'entraînement (non représenté) de la pale 1. Le stator redresseur est donc en aval du chemin de pale 15.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) de dispositif anti-couple (10) arrière d'un giravion, ledit dispositif comportant un rotor (13) caréné, ladite pale (1) profilée ayant une forme géométrique tridimensionnelle définie par différentes sections à profils aérodynamiques comprises entre un bord d'attaque (2) et un bord de fuite (3) de la pale (1) et délimitées radialement par une section d'emplanture (5) et une section d'extrémité (6) de cette pale (1) ; au moins deux sections à profils aérodynamiques (1a-1f) ayant des valeurs de cordes ($\underline{C}$) différentes le long d'une ligne d'empilement (4) étendue depuis la section d'emplanture (5) jusqu'à la section d'extrémité (6), cette pale (1) étant vrillée, les profils aérodynamiques (1a-1f) de cette pale (1) étant empilés selon une ligne d'empilement (4) des sections à profils aérodynamiques (1a-1f) déterminant, avant vrillage, une surface plane d'extension délimitée radialement de la section d'emplanture (5) à la section d'extrémité (6), et selon une ligne de vrillage de la surface plane d'extension qui est définie selon une loi de vrillage prédéterminée, la ligne d'empilement (4) s'étendant à une distance comprise entre 25% et 50% de la corde ($\underline{C}$) en partant du bord d'attaque (2), et présentant sur la surface plane d'extension une courbe avec successivement à partir de la section d'emplanture (5) une première flèche arrière (7), une flèche avant (8) et enfin une dernière flèche arrière (9) jusqu'à la section d'extrémité (6), **caractérisée en ce que** ladite section d'emplanture (5) à profil aérodynamique (1a) ayant une corde ($\underline{C}$) inférieure à la corde ($\underline{C}$) de la section d'extrémité (6) à profil aérodynamique (1f) et ladite corde ($\underline{C}$) des sections à profils aérodynamiques s'élargissant depuis la section d'emplanture (5) en direction de la section d'extrémité (6) dont la corde ($\underline{C}$) est égale ou inférieure à 1,6 fois la corde de référence ($\underline{C}_{ref}$) de la section d'emplanture (5).

2. Pale (1) selon la revendication 1, **caractérisée en ce que** les sections à profils aérodynamiques présentent une épaisseur relative qui est diminuée progressivement en direction radiale depuis la section d'emplanture à profil aérodynamique (1a) vers la section d'extrémité (6), de manière à présenter une épaisseur relative à ladite section d'extrémité à profil aérodynamique (1f) qui est comprise entre 9% et 6%.

3. Pale (1) selon la revendication 1, **caractérisée en ce que** la section d'emplanture (5) à profil aérodynamique (1a) présentent une épaisseur relative qui est comprise entre 9% et 14%.

4. Pale (1) selon l'une quelconque des revendications 1 à 3, **caractérisée en ce que** la corde ($\underline{C}$) maximale atteint en extrémité (6) de pale (1), la valeur de la corde de référence ($\underline{C}_{ref}$) multipliée par un facteur $a_c$ supérieur ou égal à 1,1 et inférieur ou égal à 1,6.

5. Pale (1) selon la revendication 4, **caractérisée en ce que** ledit facteur $a_c$ est égal à 1,38.

6. Pale (1) selon la revendication 1, **caractérisée en ce que** ladite ligne de vrillage correspond à la ligne d'empilement (4).

7. Pale (1) selon l'une quelconque des revendications 1 à 6, **caractérisée en ce que** la ligne d'empilement (4) présente une forme à courbe constitutive donnée par un polynôme du troisième degré, ladite ligne d'empilement (4) s'étendant à une distance de 30% de la corde ($\underline{C}$) en partant du bord d'attaque (2) des sections à profils aérodynamiques (1a-1f).

8. Pale (1) selon l'une quelconque des revendications 1 à 7, **caractérisée en ce que** la pale (1) comporte un assemblage de six sections à profils aérodynamiques (1a-1f) distinctes, le long de la ligne d'empilement (4).

9. Pale (1) selon l'une quelconque des revendications 1 à 8,**caractérisée en ce que** le bord d'attaque (2) présente en continuité de la section d'emplanture (5) à profil aérodynamique à la section d'extrémité (6) à profil aérodynamique, une forme concave puis convexe.

10. Pale (1) selon l'une quelconque des revendications 1 à 9, **caractérisée en ce que** la corde ($\underline{C}$) présente une loi d'évolution telle que la valeur C(r) de la corde ($\underline{C}$) pour un rayon r d'une section courante à profil aérodynamique, est définie par :

$$C(r) = C_{ref}, \quad \text{si} \quad k \leq r \leq b_c \times R_{max}$$

et

$$C(r) = C_{ref} + \left[C_{max} - C_{ref}\right] \times \frac{\left[r - (b_c \times R_{max})\right]^n}{\left[R_{max} - (b_c \times R_{max})\right]^n}, \quad \text{si} \quad r \geq b_c \times R_{max}$$

avec k désignant le rayon de la section d'emplanture (5) à profil aérodynamique, $R_{max}$ désignant le rayon maximal de la section d'extrémité (6) à profil aérodynamique, $C_{max}$ désignant la corde ($\underline{C}$) de la section d'extrémité (6) égale à ($a_c$ x $C_{ref}$), x désignant le signe de la multiplication et $b_c$ et n désignant des première et deuxième constantes prédéterminées.

11. Pale (1) selon la revendication 10, **caractérisée en ce que** ladite première constante $b_c$ est comprise entre 0 et 1.

12. Pale (1) selon la revendication 11, **caractérisée en ce que** la première constante $b_c$ vaut 0,68.

13. Pale (1) selon la revendication 10, **caractérisée en ce que** la deuxième constante n est comprise entre 1 et 5.

14. Pale (1) selon la revendication 13, **caractérisée en ce que** la deuxième constante n vaut 1,7.

15. Pale (1) selon l'une quelconque des revendications 1 à 14, **caractérisée en ce que** la ligne d'empilement (4) est une courbe, tracée par rapport à une direction radiale du dispositif anti-couple (10) de destination et donnée par un polynôme tel que

$$Y_{AC} / C_{ref} = a_e \times Q^3 + b_e \times Q^2 + c_e \times Q \quad \text{avec :} \quad 0 \leq Q \leq 1 \, ;$$

où: $Q = \dfrac{r - k}{R_{max} - k}$ est un nombre adimensionnel, $Y_{AC}$ est la position de la ligne d'empilement des sections à profils aérodynamiques pour un rayon r ; et $a_e$, $b_e$, $c_e$ sont des première, deuxième et troisième valeurs prédéterminées.

16. Pale (1) selon la revendication 15, **caractérisée en ce que** les première, deuxième et troisième valeurs $a_e$, $b_e$ et $c_e$ sont choisies pour obtenir une ligne d'empilement (4) qui s'étend selon une répartition sensiblement identique de part et d'autre d'un axe de pas moyen fictif de la pale (1), ladite répartition équilibrant les moments statiques de commande en pas s'exerçant sur la pale (1).

17. Pale (1) selon la revendication 15, **caractérisée en ce que** la première valeur $a_e$ vaut (- 2,5681), la deuxième valeur

$b_e$ vaut (+ 3,9238) et la troisième valeur $c_e$ vaut (+ 1,3558).

18. Dispositif (10) anti-couple comportant un carénage (11) délimitant une veine (12) de circulation d'air dans laquelle est disposé un rotor (13), des organes d'entraînement du rotor (13) et des organes de réglage du pas desdites pales (1), **caractérisée en ce que** ledit rotor (13) est pourvu de pales (1) conformes à l'une des revendications 1 à 17.

19. Dispositif (10) selon la revendication 18, **caractérisé en ce que** ce dispositif (10) comporte un stator redresseur du flux d'air, en arrière du chemin de pale (15) des pales dudit rotor (13), ce stator redresseur étant muni d'aubes profilées (14).

**Patentansprüche**

1. Rotorblatt (1) einer hinteren Gegendrehmomentvorrichtung (10) eines Drehflügelflugzeugs, wobei die Vorrichtung einen verkleideten Rotor (13) aufweist, und das profilierte Rotorblatt (1) eine dreidimensionale geometrische Form aufweist, die durch verschiedene Abschnitte mit aerodynamischen Profilen definiert ist, die zwischen einer Vorderkante (2) und einer Hinterkante (3) des Rotorblatts (1) liegen und radial begrenzt sind durch einen Wurzelabschnitt (5) und einem Endabschnitt (6) dieses Rotorblatts (1), wobei mindestens zwei Abschnitte mit aerodynamischen Profilen (1a-1f) entlang einer Aufreihungslinie (4), die sich von dem Wurzelabschnitt (5) bis zu dem Endabschnitt (6) erstreckt, verschiedene Flügeltiefenwerte ($\underline{C}$) aufweisen, wobei dieses Rotorblatt (1) verdreht ist, und wobei die aerodynamischen Profile (1a-1f) dieses Rotorblatts (1) entlang einer Aufreihungslinie (4) der Abschnitte mit aerodynamischen Profilen (1a-1f) aufgereiht sind, die vor der Verdrehung eine ebene Erstreckungsfläche festlegen, die radial von dem Wurzelabschnitt (5) bis zum Endabschnitt (6) und entlang einer Verdrehungslinie der ebenen Erstreckungsfläche, die gemäß einer vorbestimmten Verdrehungsgesetzmäßigkeit definiert ist, eingegrenzt ist, wobei die Aufreihungslinie (4) sich in einem Abstand, der zwischen 25% und 50% der Flügeltiefe ($\underline{C}$) beträgt, ausgehend von der Vorderkante (4) erstreckt, und auf der ebenen Erstreckungsfläche eine Kurve bildet mit aufeinanderfolgend, ausgehend von dem Wurzelabschnitt (5), einer ersten Durchbiegung nach hinten (7), einer Durchbiegung nach vorne (8), und schließlich einer letzten Durchbiegung nach hinten (9) bis zum Endabschnitt (6), **dadurch gekennzeichnet, dass** der Wurzelabschnitt (5) mit aerodynamischem Profil (1a) eine Flügeltiefe ($\underline{C}$) aufweist, die kleiner ist als die Flügeltiefe ($\underline{C}$) des Endabschnitts (6) mit aerodynamischem Profil (1f), und die Flügeltiefe ($\underline{C}$) der Abschnitte mit aerodynamischen Profilen sich von dem Wurzelabschnitt (5) in Richtung auf den Endabschnitt (6), dessen Flügeltiefe ($\underline{C}$) kleiner oder gleich dem 1,6-fachen der Bezugsflügeltiefe ($\underline{C_{ref}}$) des Wurzelabschnitts (5) beträgt, vergrößern.

2. Rotorblatt (1) nach Anspruch 1, **dadurch gekennzeichnet, dass** die Abschnitte mit aerodynamischen Profilen eine relative Dicke aufweisen, die sich in Radialrichtung ausgehend von dem Wurzelabschnitt mit aerodynamischem Profil (1a) zu dem Endabschnitt (6) hin derart vermindert, dass sie eine relative Dicke des Endabschnitts mit aerodynamischem Profil (1f) aufweist, die zwischen 9% und 6% liegt.

3. Rotorblatt (1) nach Anspruch 1 **dadurch gekennzeichnet, dass** der Wurzelabschnitt (5) mit aerodynamischem Profil (1a) eine relative Dicke aufweist, die zwischen 9% und 14% beträgt.

4. Rotorblatt (1) nach einem der Ansprüche 1 bis 3, **dadurch gekennzeichnet, dass** die maximale Flügeltiefe ($\underline{C}$) am Ende (6) des Rotorblatts (1) den Wert der Bezugsflügeltiefe ($\underline{C_{ref}}$) multipliziert mit einem Faktor $a_c$, der größer oder gleich 1,1 und kleiner oder gleich 1,6 ist, erreicht.

5. Rotorblatt (1) nach Anspruch 4, **dadurch gekennzeichnet, dass** der Faktor $a_c$ 1,38 beträgt.

6. Rotorblatt (1) nach Anspruch 1, **dadurch gekennzeichnet, dass** die Verdrehungslinie der Aufreihungslinie (4) entspricht.

7. Rotorblatt (1) nach einem der Ansprüche 1 bis 6, **dadurch gekennzeichnet, dass** die Aufreihungslinie (4) eine Form einer konstitutiven Kurve aufweist, die gegeben ist durch ein Polynom dritten Grades, wobei sich die Aufreihungslinie (4) in einem Abstand von 30% der Flügeltiefe ($\underline{C}$) ausgehend von der Vorderkante (2) der Abschnitte mit aerodynamischen Profilen (1a-1f) erstreckt.

8. Rotorblatt (1) nach einem der Ansprüche 1 bis 7, **dadurch gekennzeichnet, dass** das Rotorblatt (1) eine Anordnung von sechs getrennen Abschnitten mit aerodynamischen Profilen (1a-1f) entlang der Aufreihungslinie (4) aufweist.

9. Rotorblatt (1) nach einem der Ansprüche 1 bis 8, **dadurch gekennzeichnet, dass** die Vorderkante (2) durchgehend von dem Wurzelabschnitt (5) mit aerodynamischem Profil bis zu dem Endabschnitt (6) mit aerodynamischen Profil eine konkave Form und dann eine konvexe Form aufweist.

10. Rotorblatt (1) nach einem der Ansprüche 1 bis 9, **dadurch gekennzeichnet, dass** die Flügeltiefe ($\underline{C}$) eine solche Entwicklungsgesetzmäßigkeit aufweist, dass der Wert $C(r)$ der Flügeltiefe ($\underline{C}$) für einen Radius r eines üblichen Abschnitts mit aerodynamischem Profil definiert ist durch:

$$C(r) = C_{ref}, \text{ wenn } k \leq r \leq b_c \times R_{max}$$

und

$$C(r) = C_{ref} + \left[ C_{max} - C_{ref} \right] \times \frac{\left[ r - (b_c \times R_{max}) \right]^n}{\left[ R_{max} - (b_c \times R_{max}) \right]^n}, \text{ wenn } r \geq b_c \times R_{max},$$

wobei k den Radius des Wurzelabschnitts (5) mit aerodynamischem Profil, $R_{max}$ den maximalen Radius des Endabschnitts (6) mit aerodynamischem Profil, $C_{max}$ die Flügeltiefe ($\underline{C}$) des Endabschnitts (6), die gleich ($a_c \times C_{ref}$) ist, x das Multiplikationszeichen, und $b_c$ und n erste und zweite vorbestimmte Konstanten bezeichnen.

11. Rotorblatt (1) nach Anspruch 10, **dadurch gekennzeichnet, dass** die erste Konstante $b_c$ zwischen 0 und 1 liegt.

12. Rotorblatt (1) nach Anspruch 11, **dadurch gekennzeichnet, dass** die erste Konstante $b_c$ 0,68 beträgt.

13. Rotorblatt (1) nach Anspruch 10, **dadurch gekennzeichnet, dass** die zweite Konstante n zwischen 1 und 5 liegt.

14. Rotorblatt (1) nach Anspruch 13, **dadurch gekennzeichnet, dass** die zweite Konstante n 1,7 beträgt.

15. Rotorblatt (1) nach einem der Ansprüche 1 bis 14, **dadurch gekennzeichnet, dass** die Aufreihungslinie (4) eine Kurve ist, die relativ zu einer radialen Zielrichtung der Gegendrehmomentvorrichtung (10) vorgezeichnet ist und gegeben ist durch folgendes Polynom:

$$Y_{AC} / C_{ref} = a_e \times Q^3 + b_e \times Q^2 + c_e \times Q \text{ mit } 0 \leq Q \leq 1,$$

wobei $Q = \frac{r - k}{R_{max} - k}$ eine dimensionslose Zahl, $Y_{AC}$ die Lage der Aufreihungslinie der Abschnitte mit aerodynamischen Profilen für einen Radius r, und $a_e$, $b_e$, $c_e$ erste, zweite und dritte vorbestimmte Werte bezeichnen.

16. Rotorblatt (1) nach Anspruch 15, **dadurch gekennzeichnet, dass** die ersten, zweiten und dritten Werte $a_e$, $b_e$ und $c_e$ gewählt sind, um eine Aufreihungslinie (4) zu erhalten, die sich gemäß einer im Wesentlichen identischen Verteilung zu beiden Seiten einer Achse eines mittleren fiktiven Anstellwinkels des Rotorblatts (1) erstreckt, wobei die Verteilung statische Anstellungssteuerungsmomente, die auf das Rotorblatt (1) ausgeübt werden, ausgleicht.

17. Rotorblatt (1) nach Anspruch 15, **dadurch gekennzeichnet, dass** der erste Wert $a_e$ (-2,5681) beträgt, der zweite Wert $b_e$ (+3,9238) beträgt, und der dritte Wert $c_e$ (+1,3558) beträgt.

18. Gegendrehmomentvorrichtung (10) mit einer Verkleidung (11), die eine Luftzirkulationsströmung (12) eingrenzt, in der ein Rotor (13), Antriebsorgane des Rotors (13) und Steuerorgane der AnstellNeigungswinkel der Rotorblätter (1) angeordnet sind, **dadurch gekennzeichnet, dass** der Rotor (13) mit Rotorblättern (1) gemäß einem der Ansprüche 1 bis 17 versehen ist.

19. Vorrichtung (10) nach Anspruch 18, **dadurch gekennzeichnet, dass** die Vorrichtung (10) einen Luftströmungs-Gleichrichterstator hinter dem Rotorblattweg (15) der Rotorblätter des Rotors (13) aufweist, wobei der Gleichrichterstator mit profilierten Schaufeln (14) versehen ist.

**Claims**

1. Blade (1) for a tail anti-torque device (10) of a rotorcraft, said device comprising a ducted rotor (13), said profiled blade (1) having a three-dimensional geometrical shape defined by different sections with aerodynamic profiles comprised between a leading edge (2) and a trailing edge (3) of the blade (1) and delimited radially by a root section (5) and an end section (6) of the blade (1); at least two sections with aerodynamic profiles (1a-1f) having different chord values (C) along a stacking line (4) extending from the root section (5) as far as the end section (6), the blade (1) being twisted, the aerodynamic profiles (1a-1f) of the blade (1) being stacked along a stacking line (4) of the sections with aerodynamic profiles (1a-1f) determining, prior to twisting, a plane extension surface delimited radially from the root section (5) to the end section (6), and along a twisting line of the plane extension surface which is defined according to a predetermined twisting law, the stacking line (4) extending at a distance comprised between 25% and 50% of the chord (C) starting from the leading edge (2), and having on the plane extension surface a curve with successively from the root section (5) a first back sweep (7), a forward sweep (8) and finally a last back sweep (9) as far as the end section (6), **characterised in that** said root section (5) with aerodynamic profile (1a) having a chord ($\underline{C}$) less than the chord ($\underline{C}$) of the end section (6) with aerodynamic profile (1f) and said chord ($\underline{C}$) of the sections with aerodynamic profiles widening from the root section (5) in the direction of the end section (6), the chord ($\underline{C}$) of which is equal to or less than 1.6 times the reference chord ($\underline{C}_{ref}$) of the root section (5).

2. Blade (1) according to claim 1, **characterised in that** the sections with aerodynamic profiles have a relative thickness which decreases progressively in the radial direction from the root section with aerodynamic profile (1a) towards the end section (6), so as to have a relative thickness at said end section with aerodynamic profile (1a) which is comprised between 9% and 6%.

3. Blade (1) according to claim 1, **characterised in that** the root section (5) with aerodynamic profile (1a) has a relative thickness which is comprised between 9% and 14%.

4. Blade (1) according to any one of claims 1 to 3, **characterised in that** the maximum chord ($\underline{C}$) reaches at the end (6) of blade (1) the value of the reference chord ($\underline{C}_{ref}$) multiplied by a factor $a_c$ greater than or equal to 1.1 and less than or equal to 1.6.

5. Blade (1) according to claim 4, **characterised in that** said factor $a_c$ is equal to 1.38.

6. Blade (1) according to claim 1, **characterised in that** said twisting line corresponds to the stacking line (4).

7. Blade (1) according to any one of claims 1 to 6, **characterised in that** the stacking line (4) has a shape with a constituent curve given by a polynomial of the third degree, said stacking line (4) extending at a distance of 30% of the chord ($\underline{C}$) starting from the leading edge (2) of the sections with aerodynamic profiles (1a-1f).

8. Blade (1) according to any one of claims 1 to 7, **characterised in that** the blade (1) comprises an assembly of six distinct sections with aerodynamic profiles (1a-1f) along the stacking line (4).

9. Blade (1) according to any one of claims 1 to 8, **characterised in that** the leading edge (2) has in continuity from the root section (5) with aerodynamic profile to the end section (6) with aerodynamic profile, a shape concave and then convex.

10. Blade (1) according to any one of claims 1 to 9, **characterised in that** the chord ($\underline{C}$) has a law of evolution such that the value C(r) of the chord ($\underline{C}$) for a radius r of a current section with aerodynamic profile is defined by:

$$C(r) = C_{ref} \text{, if } k \leq r \leq b_c \times R_{max}$$

and

$$C(r) = C_{ref} + [C_{max} - C_{ref}] \times \frac{[r - (b_c \times R_{max})]^n}{[R_{max} - (b_c \times R_{max})]^n} \text{, if } r \geq b_c \times R_{max}$$

with $k$ designating the radius of the root section (5) with aerodynamic profile, $R_{max}$ designating the maximum radius of the end section (6) with aerodynamic profile, $C_{max}$ designating the chord ($\underline{C}$) of the end section (6) equal to ($a_c$ x $C_{ref}$), x designating the multiplication sign and $b_c$ and n designating first and second predetermined constants.

11. Blade (1) according to claim 10, **characterised in that** said first constant $b_c$ is comprised between 0 and 1.

12. Blade (1) according to claim 11, **characterised in that** the first constant $b_c$ is 0.68.

13. Blade (1) according to claim 10, **characterised in that** the second constant $n$ is comprised between 1 and 5.

14. Blade (1) according to claim 13, **characterised in that** the second constant $n$ is 1.7.

15. Blade (1) according to any one of claims 1 to 14, **characterised in that** the stacking line (4) is a curve traced relative to a radial direction of the target anti-torque device (10) and given by a polynomial such that:

$$Y_{AC}/C_{ref} = a_e \times Q^3 + b_e \times Q^2 + c_e \times Q \text{ with: } 0 \leq Q \leq 1;$$

where: $Q = \dfrac{r - k}{R_{max} - k}$ is a dimensionless number, $Y_{AC}$ is the position of the stacking line of the sections with aerodynamic profiles for a radius $r$; and $a_e$, $b_e$, $c_e$ are first, second and third predetermined values.

16. Blade (1) according to claim 15, **characterised in that** the first, second and third values $a_e$, $b_e$ and $c_e$ are selected to obtain a stacking line (4) which extends according to a distribution substantially identical on one side and the other of an imaginary mean pitch axis of the blade (1), said distribution balancing the static pitch control moments acting on the blade (1).

17. Blade (1) according to claim 15, **characterised in that** the first value $a_e$ is (- 2.5681), the second value $b_e$ is (+ 3.9238) and the third value $c_e$ is (+ 1.3558).

18. Anti-torque device (10) comprising a fairing (11) delimiting an air-circulation passage (12) in which is arranged a rotor (13), members for driving the rotor (13) and members for adjusting the pitch of said blades (1), **characterised in that** said rotor (13) is provided with blades (1) in accordance with one of claims 1 to 17.

19. Device (10) according to claim 18, **characterised in that** the device (10) comprises an airflow guiding stator downstream from the blade path (15) of the blades of said rotor (13), said guiding stator being provided with profiled vanes (14).

Fig.1

EP 2 465 771 B1

Fig.2

Fig.3

Fig.4

**EP 2 465 771 B1**

## RÉFÉRENCES CITÉES DANS LA DESCRIPTION

**Documents brevets cités dans la description**

- FR 1004891
- FR 2719549
- WO 2006110156 A
- US 20040022635 A
- WO 2004011330 A
- EP 0332492 A
- EP 2085310 A
- WO 200954815 A
- GB 212018 A